# EUROPÄISCHE PATENTSCHRIFT

(11) **EP 2 782 801 B1**
(45) Veröffentlichungstag und Bekanntmachung des Hinweises auf die Patenterteilung: **23.08.2017**
(21) Anmeldenummer: 12770041.7
(22) Anmeldetag: 24.09.2012
(51) Int. Cl.: B60T 8/48

(54) **VERFAHREN ZUM VERBLENDEN EINES GENERATOR-BREMSMOMENTS EINES GENERATORS EINES REKUPERATIVEN BREMSSYSTEMS MIT ZWEI BREMSKREISEN UND STEUERVORRICHTUNG FÜR EIN REKUPERATIVES BREMSSYSTEM MIT ZWEI BREMSKREISEN**
METHOD FOR BLENDING A GENERATOR BRAKING TORQUE OF A GENERATOR OF A RECUPERATIVE BRAKE SYSTEM HAVING TWO BRAKE CIRCUITS, AND CONTROL DEVICE FOR A RECUPERATIVE BRAKE SYSTEM HAVING TWO BRAKE CIRCUITS
PROCÉDÉ PERMETTANT D'ANNULER LE COUPLE DE FREINAGE DU GÉNÉRATEUR D'UN SYSTÈME DE FREINAGE À RÉCUPÉRATION POURVU DE DEUX CIRCUITS DE FREINAGE, ET DISPOSITIF DE COMMANDE POUR UN SYSTÈME DE FREINAGE À RÉCUPÉRATION POURVU DE DEUX CIRCUITS DE FREINAGE

(30) Priorität: 21.11.2011 DE 102011086706
(43) Veröffentlichungstag der Anmeldung: 01.10.2014
(73) Patentinhaber: Robert Bosch GmbH, 70442 Stuttgart (DE)
(72) Erfinder: STRENGERT, Stefan, 70469 Stuttgart (DE); KUNZ, Michael, 71711 Steinheim An Der Murr (DE)
(86) Internationale Anmeldenummer: PCT/EP2012/068730
(87) Internationale Veröffentlichungsnummer: WO 2013/075862

(56) Entgegenhaltungen:
- WO-A1-2004/101308
- WO-A1-2011/092308
- DE-A1- 19 604 134

## Beschreibung

Die Erfindung betrifft ein Verfahren zum Verblenden eines Generator-Bremsmoments eines Generators eines rekuperativen Bremssystems mit zwei Bremskreisen. Ebenso betrifft die Erfindung ein Verfahren zum Betreiben eines rekuperativen Bremssystems eines Fahrzeugs mit mindestens zwei Bremskreisen. Des Weiteren betrifft die Erfindung eine Steuervorrichtung für ein rekuperatives Bremssystem mit zwei Bremskreisen und ein regeneratives Bremssystem mit einer Steuervorrichtung.

### Stand der Technik

In der DE 196 04 134 A1 sind ein Verfahren und eine Vorrichtung zur Steuerung einer Bremsanlage eines Kraftfahrzeugs mit einem elektrischen Antrieb und zwei Bremskreisen beschrieben. Bei einem Abbremsen des Fahrzeugs unter Einsatz des elektrischen Antriebs zum gleichzeitigen Aufladen einer Batterie soll das von den Radbremszylindern der beiden Bremskreise auf mindestens ein Rad ausgeübte hydraulische Bremsmoment trotz einer Betätigung des Bremspedals reduziert/deaktiviert werden. Dazu soll dem durch die Betätigung des Bremspedals aus dem Hauptbremszylinder zu den Radbremszylindern verschobenen Druckmittel entgegen gewirkt werden, indem durch Öffnen der Auslassventile der beiden Bremskreise das aus dem Hauptbremszylinder verschobene Druckmittel in die Speicherkammern der beiden Bremskreise überführt wird. Auf diese Weise soll eine von dem elektrischen Antrieb ausgeführt regenerative Abbremsung verblendbar sein. Sofern die verwendeten Auslassventile aus thermischen Gründen nur für eine kurze Zeit ansteuerbar sind, sollen die beiden Auslassventile eines Bremskreises abwechselnd angesteuert werden.

Außerdem beschreibt die WO 2011/092308 A1 ein Verfahren zum Betreiben eines Bremssystems für ein Kraftfahrzeug und ein Bremssystem. Bei einem Ausführen des Verfahrens oder einem Einsetzen des Bremssystems wird bei einem Bremsen mittels mindestens einer elektrisch-regenerativen Bremse durch Ansteuerung mindestens eines Hydraulikventils Druckmittel nur in genau einen vorbestimmten Druckspeicher (aus mehreren vorhandenen Druckspeichern) abgelassen.

### Offenbarung der Erfindung

Die Erfindung schafft ein Verfahren zum Betreiben eines rekuperativen Bremssystems eines Fahrzeugs mit mindestens zwei Bremskreisen mit den Merkmalen des Anspruchs 1, eine Steuervorrichtung für eine rekuperativen Bremssystems mit zwei Bremskreisen mit den Merkmalen des Anspruchs 7 und ein regeneratives Bremssystem mit einer Steuervorrichtung mit den Merkmalen des Anspruchs 10.

### Vorteile der Erfindung

Die vorliegende Erfindung realisiert die vorteilhafte Vorgehensweise zum Verblenden eines Generator-Bremsmoments (ungleich Null) mittels einer Speicherkammerbefüllung, welche eine verbesserte Bremsleistung trotz eines Fehlerfalls und/oder eine gleichmäßigere Belastung der Speichervolumen/Speicherkammern über ihre Lebenszeit/Gesamt-Betriebszeit bewirkt.

Während das herkömmliche Verblenden durch gleichzeitiges Freischalten einer ersten hydraulischen Verbindung zwischen dem Hauptbremszylinder und einem Speichervolumen des ersten Bremskreises und einer zweiten hydraulischen Verbindung zwischen dem Hauptbremszylinder und einem Speichervolumen des zweiten Bremskreises dazu führt, dass sich der Pedalweg im Fehlerfall erheblich verlängert, ist dieser Nachteil mittels der vorliegenden Erfindung behoben. Werden bei dem herkömmlicher Weise gleichzeitig durchgeführten Freischalten der beiden hydraulischen Verbindungen die Auslassventile fälschlicher Weise geöffnet, so muss der Fahrer die beiden Speichervolumen/Speicherkammern zuerst komplett mittels einer auf ein Bremsbetätigungselement/Bremspedal ausgeübten Fahrerbremskraft befüllen, bevor ein hydraulisches Bremsmoment mindestens eines der Radbremszylinder der beiden Bremskreise aufbaubar ist. Dieser Nachteil liegt herkömmlicher Weise auch dann vor, wenn mittels des Generators kein Generator-Bremsmoment ungleich Null verfügbar ist, beispielsweise weil ein mittels des Generators aufladbarer Energiespeicher bereits vollständig aufgeladen und/oder eine Geschwindigkeit des mit dem Generator ausgestatten Fahrzeugs unter einer Mindest-Generatoreinsetz-Geschwindigkeit liegt. Demgegenüber wird bei der vorliegenden Erfindung ein gleichzeitiges Freischalten der beiden hydraulischen Verbindungen für ein regeneratives Bremsen vermieden. Somit kann der Fahrer nach einem Befüllen lediglich des Speichervolumens des in den Verblendmodus gesteuerten Bremskreises mittels der Fahrerbremskraft ein hydraulisches Bremsmoment aufbauen und somit trotz eines Fehlerfalls, beispielsweise aufgrund einer nicht-erkannten Funktionsbeeinträchtigung des Generators, das Fahrzeug auf einfache Weise und verlässlich abbremsen. Die vorliegende Erfindung gewährleistet somit einen verbesserten Sicherheitsstandard eines rekuperativen Bremssystems.

Gegenüber dem herkömmlichen gleichzeitigen Freischalten der beiden hydraulischen Verbindungen weist die vorliegende Erfindung zusätzlich den Vorteil auf, dass Komponenten der Speichervolumen/Speicherkammern, wie beispielsweise deren Dichtungen, besser geschont werden können. Bei dem herkömmlichen gleichzeitigen Freischalten der beiden hydraulischen Verbindungen hängt es von den Fertigungstoleranzen der Speichervolumen/Speicherkammern ab, welche der mindestens zwei Speicherkammern zuerst befüllt wird. Man kann dies auch so umschreiben, dass bei dem herkömmlichen gleichzeitigen Freischalten der beiden hydraulischen Verbindungen die unterschiedlichen Ansprechkräfte der Speichervolumen in der Regel dazu führen, dass das Speichervolumen/die Speicherkammer mit der niedrigeren Ansprechkraft befüllt wird. Das Speichervolumen/die Speicherkammer mit der niedrigeren Ansprechkraft wird somit deutlich stärker belastet. (Beispielsweise macht eine Dichtung der Speicherkammer mit der niedrigeren Ansprechkraft bei der herkömmlichen Vorgehensweise deutlich mehr Weg.) Häufig ist deshalb aufgrund des herkömmlichen gleichzeitigen Freischaltens der beiden hydraulischen Verbindungen die Einsetzzeit/Lebensdauer des Speichervolumens mit der niedrigeren Ansprechkraft signifikant limitiert.

Die vorliegende Erfindung ermöglicht eine gleichmäßigere Verteilung eines Gesamt-Lastkollektivs auf die mindestens zwei Speicherkammern der mindestens zwei Bremskreise. Diese gleichmäßige Teilung des Lastkollektivs auf die mindestens zwei Speichervolumen steigert die Einsetzzeit/Lebensdauer der Speichervolumen. Somit können herkömmlicher Weise bei einer Reparatur oder bei einem Austausch eines Speichervolumens/einer Speicherkammer auftretende Kosten eingespart werden.

Vorteilhafter Weise kann die hydraulische Verbindung zwischen dem Hauptbremszylinder und dem Speichervolumen des in den Verblendmodus gesteuerten Bremskreises zumindest zeitweise freigeschaltet werden, indem mindestens ein Ventil des in dem Verblendmodus gesteuerten Bremskreises zumindest zeitweise in einem zumindest teilgeöffneten Zustand gesteuert wird. Ebenso kann die hydraulische Verbindung zwischen dem Hauptbremszylinder und dem Speichervolumen des in dem Nicht-Verblendmodus gesteuerten Bremskreises während des Nicht-Verblendmodus unterbrochen werden, indem mindestens ein Ventil des in dem Nicht-Verblendmodus gesteuerten Bremskreises während des Nicht-Verblendmodus in seinem geschlossenen Zustand gesteuert wird. Somit kann das Freischalten einer hydraulischen Verbindung, bzw. das Unterbrechen einer hydraulischen Verbindung, auf einfache Weise ausgeführt werden.

Beispielsweise wird ein ABS/ASR/ESR-Bremssystem als das rekuperative Bremssystem betrieben und mindestens ein Radauslassventil kann als das mindestens eine Ventil des in den Verblendmodus gesteuerten Bremskreises zumindest zeitweise in einen zumindest teilgeöffneten Zustand gesteuert werden. Entsprechend kann auch mindestens ein Radauslassventil als das mindestens eine Ventil des in dem Nicht-Verblendmodus gesteuerten Bremskreises während des Nicht-Verblendmodus in seinem geschlossenen Zustand gesteuert werden. Zum Freischalten einer hydraulischen Verbindung, bzw. zum Unterbinden einer hydraulischen Verbindung, kann somit mindestens ein in einem Bremskreis in der Regel bereits vorhandenes Ventil genutzt werden.

Als Alternative dazu kann auch, sofern ein ABS/ASR/ESR-Bremssystem als das rekuperative Bremssystem betrieben wird, ein Hochdruckschaltventil als das mindestens eine Ventil des in den Verblendmodus gesteuerten Bremskreises zumindest zeitweise in einem zumindest teilgeöffneten Zustand gesteuert werden. Korrespondierend dazu kann auch ein Hochdruckschaltventil als das mindestens eine Ventil des in den Nicht-Verblendmodus gesteuerten Bremskreises während des Nicht-Verblendmodus in seinem geschlossenen Zustand gesteuert werden. Die Verwendung eines Hochdruckschaltventils als das mindestens eine angesteuerte Ventil zum Freischalten oder Unterbrechen einer hydraulischen Verbindung zwischen dem Hauptbremszylinder und dem mindestens einen zugeordneten Speichervolumen ist mit dem Vorteil verbunden, dass das aus dem Hauptbremszylinder herausgedrückte Bremsflüssigkeitsvolumen unter Umgehung einer Radbremszange/eines Radbremszylinders in das jeweilige Speichervolumen verschoben wird. Somit ist kein Rest-Bremsdruckaufbau aufgrund eines Verschiebens des aus dem Hauptbremszylinder herausgedrückten Bremsflüssigkeitsvolumens über die Radbremszangen/die Radbremszylinder in das jeweilige Speichervolumen zu befürchten.

In einer bevorzugten Ausführungsform werden nach einem Ausführen des Verfahrens des Anspruchs 1 der erste Bremskreis als der zweite Bremskreis und der zweite Bremskreis als der erste Bremskreis neu festgelegt. Man kann dies auch als eine ständige Permutation der Öffnungsreihenfolge der mindestens zwei Speichervolumen der mindestens zwei Bremskreise umschreiben. Dies gewährleistet ein vorteilhaft gleichmäßiges Verteilen des Gesamt-Lastkollektivs auf die mindestens zwei Speichervolumen/Speicherkammern.

In einer weiteren vorteilhaften Ausführungsform wird nach einem Ausführen des Verfahrens des Anspruchs 1 eine erste Größe bezüglich eines während eines Betriebs eines Speichervolumens eines der mindestens zwei Bremskreise aufgenommenen Gesamt-Flüssigkeitsvolumens zumindest mit einer zweiten Größe bezüglich eines während eines Betriebs eines Speichervolumens eines weiteren der mindestens zwei Bremskreise aufgenommenen Gesamt-Flüssigkeitsvolumens verglichen. Anschließend wird der Bremskreis mit der minimalen Größe von zumindest der ersten Größe und der zweiten Größe als der erste Bremskreis neu festgelegt. Man kann dies auch als eine Festlegung der Öffnungsreihenfolge aufgrund des kumulierten aufgenommenen Volumens jeder der Speichervolumen/Speicherkammern umschreiben. Somit kann bei dieser Ausführungsform jenes Speichervolumen zum Verblenden genutzt werden, welches auf Grund seiner vergleichsweise geringen bisherigen Belastung einer erneuten Verwendung mit einer relativ hohen Wahrscheinlichkeit standhält. Gleichzeitig wird gezielt das Speichervolumen durch Nichtverwendung geschont, welches bereits auf Grund eines häufigen und/oder starken Einsetzens durch ein erneutes Verwenden mit einer größeren Wahrscheinlichkeit beschädigt werden könnte.

Zur Gewährleistung der oben genannten Vorteile kann auch eine entsprechende Steuervorrichtung für ein rekuperatives Bremssystem mit mindestens zwei Bremskreisen genutzt werden.

Beispielsweise ist mittels des ersten Steuersignals mindestens ein Ventil des in den Verblendmodus gesteuerten ersten Bremskreises zumindest zeitweise in einem zumindest teilgeöffneten Zustand steuerbar. Ebenso kann mittels des zweiten Steuersignals mindestens ein Ventil des in dem Nicht-Verblendmodus gesteuerten zweiten Bremskreises während des Nicht-Verblendmodus in seinem geschlossenen Zustand steuerbar sein. Das mindestens eine Ventil kann mindestens ein Radauslassventil und/oder ein Hochdruckschaltventil sein. Somit können bereits an dem Bremssystem in der Regel verbaute Ventile zusammen mit der vorteilhaften Ausführungsform der Steuervorrichtung genutzt werden. Auf dies Weise sind die Kosten und ein Bauraumbedarf des mit der Steuervorrichtung zusammenwirkenden rekuperativen Bremssystems reduzierbar. Es wird jedoch darauf hingewiesen, dass anstelle oder als Ergänzung zu den hier aufgezählten Ventilen auch weitere Ventile zum Freischalten/Unterbrechen einer hydraulischen Verbindung einsetzbar sind.

In einer bevorzugten Weiterbildung umfasst die Steuervorrichtung zusätzlich eine Vergleichseinrichtung, mittels welcher eine erste Größe bezüglich eines während eines Betriebs eines Speichervolumens eines der mindestens zwei Bremskreise aufgenommenen Gesamt-Flüssigkeitsvolumens zumindest mit einer zweiten Größe bezüglich eines während eines Betriebs eines Speichervolumens eines weiteren der mindestens zwei Bremskreise aufgenommen Gesamt-Flüssigkeitsvolumens vergleichbar ist. Außerdem ist die Vergleichseinrichtung zusätzlich dazu ausgelegt, den Bremskreis mit der minimalen Größe von zumindest der ersten Größe und der zweiten Größe als den ersten Bremskreis neu festzulegen. Somit kann auch mittels der hier beschriebenen Steuervorrichtung die Öffnungsreihe anhand des kumulierten aufgenommenen Volumens festgelegt werden. Als Alternative dazu kann die Steuervorrichtung auch für eine ständige Permutation der Öffnungsreihenfolge ausgelegt sein.

Die oben genannten Vorteile sind auch bei einem generativen Bremssystem mit einer korrespondierenden Steuervorrichtung gewährleistet.

### Kurze Beschreibung der Zeichnungen

Weitere Merkmale und Vorteile der vorliegenden Erfindung werden nachfolgend anhand der Figuren erläutert. Es zeigen:
Fig. 1a bis 1d eine schematische Gesamtdarstellung und drei schematische Teildarstellungen zum Erläutern einer Ausführungsform des Verfahrens zum Verblenden eines Generator-Bremsmoments;
Fig. 2 ein Flussdiagramm zum Darstellen einer Ausführungsform des Verfahrens zum Betreiben eines rekuperativen Bremssystems; und
Fig. 3 eine schematische Darstellung einer Ausführungsform der Steuervorrichtung.

### Ausführungsformen der Erfindung

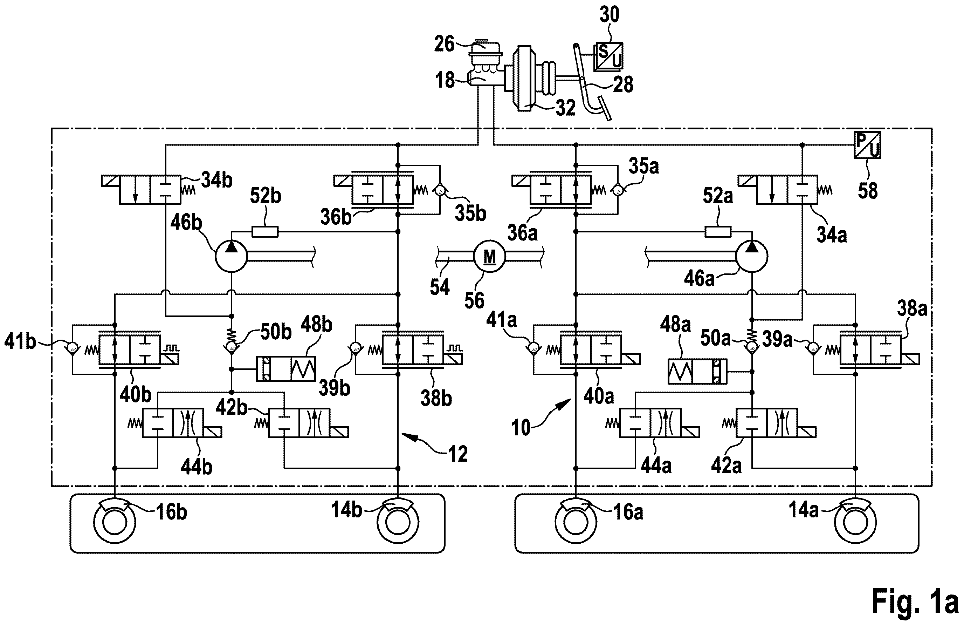

Fig. 1a bis 1d zeigen eine schematische Gesamtdarstellung und drei schematische Teildarstellungen zum Erläutern einer Ausführungsform des Verfahrens zum Verblenden eines Generator-Bremsmoments.

Das in Fig. 1a schematisch wiedergegebene und mittels des beschriebenen Verfahrens betreibbare Bremssystem ist beispielsweise in einem Hybrid- und in einem Elektrofahrzeug vorteilhaft einsetzbar. Die Einsetzbarkeit des mittels des im Weiteren beschriebenen Verfahrens betriebenen Bremssystems ist jedoch nicht auf ein Hybrid- oder Elektrofahrzeug beschränkt.

Das Bremssystem hat einen ersten Bremskreis 10 mit mindestens einer Radbremszange 14a und 16a. Außerdem hat das Bremssystem auch einen zweiten Bremskreis 12 mit mindestens einer Radbremszange 14b und 16b. Beispielsweise umfasst das Bremssystem einen ersten Bremskreis 10 mit einer ersten Radbremszange 14a und einer zweiten Radbremszange 16b und einen zweiten Bremskreis 12 mit einer dritten Radbremszange 14b und einer vierten Radbremszange 16b. Bevorzugter Weise ist das Bremssystem in diesem Fall für ein Fahrzeug mit X-Bremskreisaufteilung ausgelegt. In diesem Fall sind die erste Radbremszange 14a und die dritte Radbremszange 14b einer ersten Fahrzeugachse zugeordnet, während die zweite Radbremszange 16a und die vierte Radbremszange 16b einer anderen Fahrzeugachse zugeordnet sind. Die einem Bremskreis 10 und 12 zugeordneten Räder können insbesondere diagonal am Fahrzeug angeordnet sein. Beispielsweise können die erste Radbremszange 14a und die dritte Radbremszange 14b der Vorderachse zugeordnet sein, während die zweite Radbremszange 16a und die vierte Radbremszange 16b der Hinterachse zugeordnet sind. Das im Weiteren beschriebene Bremssystem ist jedoch nicht auf eine X-Bremskreisaufteilung beschränkt. Stattdessen ist das Bremssystem auch einsetzbar, wenn die einem gemeinsamen Bremskreis 10 oder 12 zugeordneten Räder achsweise oder auf einer Seite des Fahrzeugs angeordnet sind.

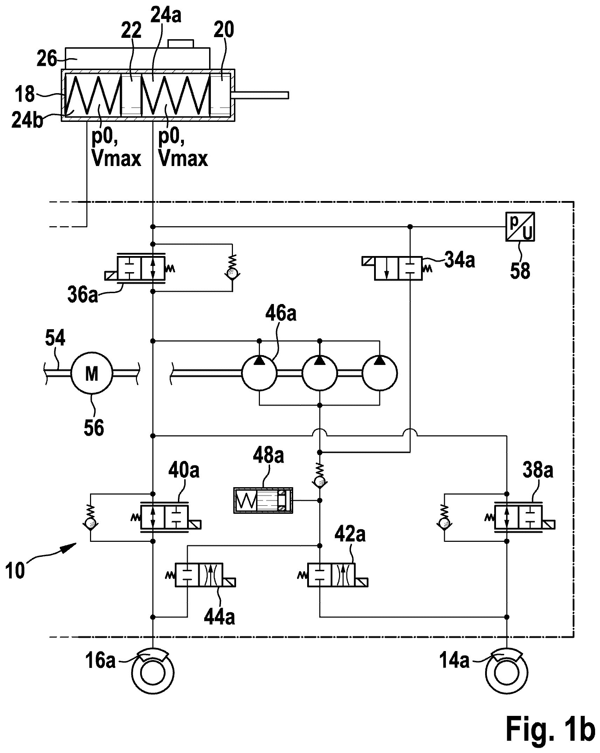

Das Bremssystem weist einen Hauptbremszylinder 18 auf, welcher beispielsweise als Tandemhauptbremszylinder ausführbar ist. Der Hauptbremszylinder 18 kann mindestens einen (lediglich in Fig. 1b bis 1d dargestellten) verstellbaren Hauptbremszylinder-Kolben 20 und 22 haben, welcher zumindest teilweise in mindestens eine Druckkammer 24a oder 24b des Hauptbremszylinders 18 verstellbar ist. Bevorzugter Weise umfasst der Hauptbremszylinder 18 einen als Stangenkolben 20 bezeichenbaren ersten verstellbaren Kolben (Primärkolben), welcher zumindest teilweise in eine dem ersten Bremskreis 10 zugeordnete erste Druckkammer 24a des Hauptbremszylinders 18 hineinragt, und einen als Schwimmkolben 22 bezeichenbaren zweiten verstellbaren Kolben (Sekundärkolben), der zumindest teilweise in eine dem zweiten Bremskreis 12 zugeordnete zweite Druckkammer 24b des Hauptbremszylinders 18 hineinragt. In einer bevorzugten Ausführungsform ist der Schwimmkolben 22 so verstellbar, dass bei einem Verstellen des Schwimmkolbens 22 in eine erste Richtung das erste Innenvolumen der ersten Druckkammer 24a abnimmt, während das Innenvolumen der zweiten Druckkammer 24b zunimmt. Entsprechend kann über ein Verstellen des Schwimmkolbens 22 in eine zweite Richtung das Innenvolumen der ersten Druckkammer 24a bei einer Abnahme des Innenvolumens der zweiten Druckkammer 24b zunehmen. Das Bremssystem ist jedoch nicht auf die Verwendung eines Tandemhauptbremszylinders oder auf eine bestimmte Ausbildung des Hauptbremszylinders 18 beschränkt. Der Hauptbremszylinder 18 kann über mindestens eine Bremsflüssigkeit-Austauschöffnung, wie beispielsweise eine Schnüffelbohrung, mit einem Bremsmediumreservoir 26 verbunden sein.

Das Bremssystem weist vorzugsweise ein an dem Hauptbremszylinder 18 angeordnetes Bremsbetätigungselement 28, wie beispielsweise ein Bremspedal, auf. Vorteilhafterweise ist das Bremsbetätigungselement 28 derart an dem Hauptbremszylinder 18 angeordnet, dass bei einem Betätigen des Bremsbetätigungselements 28 mit zumindest einer Mindeststärke eine auf das Bremsbetätigungselement 28 aufgebrachte Fahrerbremskraft auf mindestens einen verstellbaren Hauptbremszylinder-Kolben 20 und 22, wie beispielsweise auf den Stangenkolben 20 und den Schwimmkolben 22, so übertragbar ist, dass der Hauptbremszylinder-Kolben 20 und 22 mittels der Fahrerbremskraft verstellbar ist. Bevorzugter Weise wird mittels dieses Verstellens des Hauptbremszylinder-Kolbens ein Innendruck in mindestens einer Druckkammer 24a und 24b des Hauptbremszylinders 18 gesteigert.

Bevorzugter Weise umfasst das Bremssystem auch mindestens einen Bremsbetätigungselement-Sensor 30, mittels welchem die Betätigungsstärke (Bremsstärkegröße) der Betätigung des Bremsbetätigungselements 28 durch den Fahrer ermittelbar ist. Der Bremsbetätigungselement-Sensor 30 kann beispielsweise einen Bremskraftsensor, einen Bremsdrucksensor, einen Pedalwegsensor, einen Differenzwegsensor und/oder einen Stangenwegsensor umfassen. Zur Erfassung der Betätigungsstärke (Bremsstärkegröße), welche dem Fahrerbremswunsch entspricht, ist jedoch auch eine anders geartete Sensorik anstelle oder zusätzlich zu den hier aufgezählten Sensortypen einsetzbar.

Das dargestellte Bremssystem weist in einer bevorzugten Ausführungsform noch einen Bremskraftverstärker 32, wie beispielsweise einen Vakuumbremskraftverstärker, auf. Anstelle eines Vakuumbremskraftverstärkers kann das Bremssystem auch einen anderen Typ des Bremskraftverstärkers 32, wie beispielsweise eine hydraulische und/oder eine elektromechanische Verstärkungseinrichtung, aufweisen. Der Bremskraftverstärker 32 kann insbesondere ein stetig regelbarer/stetig steuerbarer Bremskraftverstärker 32 sein.

Nachfolgend werden mit Bezug zu Fig. 1a weitere Komponenten der mittels der Ausführungsform des Verfahrens zum Verblenden eines Generator-Bremsmoments betriebenen Bremssystems beschrieben. Es wird ausdrücklich drauf hingewiesen, dass die im Weiteren beschriebenen Komponenten des Bremssystems lediglich ein Beispiel für eine mögliche Ausbildung eines mittels des Verfahrens betreibbaren/ansteuerbaren/verbessert einsetzbaren Bremssystems darstellen. Ein Vorteil des Verfahrens zum Verblenden eines Generator-Bremsmoments besteht vor allem darin, dass die Bremskreise 10 und 12 nicht auf eine bestimmte Ausbildung oder auf das Einsetzen bestimmter Komponenten festgelegt sind. Stattdessen können die Bremskreise 10 und 12 mit einer hohen Wahlfreiheit modifiziert werden, ohne dass die Vorteile der Ausführungsform des Verfahrens zum Verblenden eines Generator-Bremsmoments beeinträchtigt werden:
Jeder der Bremskreise 10 und 12 ist mit einem Hochdruckschaltventil 34a und 34b und einem Umschaltventil 36a und 36b (mit einer parallel dazu verlaufenden Bypassleitung und einem darin angeordneten Rückschlagventil 35a und 35b) so ausgebildet, dass der Fahrer über den Hauptbremszylinder 18 direkt in die Radbremszangen 14a, 14b, 16a und 16b hineinbremsen kann. In dem ersten Bremskreis 10 sind der ersten Radbremszange 14a ein erstes Radeinlassventil 38a und der zweiten Radbremszange 16a ein zweites Radeinlassventil 40a, jeweils mit einer parallel dazu verlaufenden Bypassleitung und einem in jeder Bypassleitung angeordneten Rückschlagventil 39a und 41a, zugeordnet. Zusätzlich sind ein erstes Radauslassventil 42a der ersten Radbremszange 14a und ein zweites Radauslassventil 44a der zweiten Radbremszange 16a zugeordnet. Entsprechend können auch in dem zweiten Bremskreis 12 ein drittes Radeinlassventil 38b der dritten Radbremszange 14b und ein viertes Radeinlassventil 40b der dritten Radbremszange 16b zugeordnet sein. Parallel zu jedem der beiden Radeinlassventile 38b und 40b des zweiten Bremskreises 12 kann jeweils eine Bypassleitung mit einem darin angeordneten Rückschlagventil 39b und 41 b verlaufen. Des Weiteren können auch in dem zweiten Bremskreis 12 ein drittes Radauslassventil 42b der dritten Radbremszange 14b und ein viertes Radauslassventil 44b der vierten Radbremszange 16b zugeordnet sein.

Außerdem umfasst jeder der Bremskreise 10 und 12 eine Pumpe 46a und 46b, deren Ansaugseite mit den Radauslassventilen 42a und 44a oder 42b und 44b verbunden ist und deren Förderseite zu dem zugeordneten Umschaltventil 36a oder 36b gerichtet ist. Eine zwischen den Radauslassventilen 42a und 44a oder 42b und 44b und der Pumpe 46a oder 46b angeordnete Speicherkammer 48a oder 48b (z.B. Niederdruckspeicher) und ein zwischen der Pumpe 46a oder 46b und der Speicherkammer 48a oder 48b liegendes Überdruckventil 50a oder 50b können die Bremskreise 10 und 12 ebenso aufweisen. Optionaler Weise kann jeder der beiden Bremskreise 10 und 12 noch einen Glättungsfilter 52a oder 52b umfassen, welcher an einer Förderseite der jeweiligen Pumpe 46a oder 46b anordbar ist. Mittels eines derartigen Pumpglättungsfilters 52a und 52b kann ein mittels der mindestens einen Pumpe 46a und 46b erzeugter Förderstrom geglättet werden.

Die Pumpen 46a und 46b können auf einer gemeinsamen Welle 54 eines Motors 56 angeordnet sein. Jede der Pumpen 46a und 46b kann als Drei-Kolben-Pumpen ausgebildet sein. Anstelle von einer Drei-Kolben-Pumpe kann jedoch auch ein anderer Pumpentyp für mindestens eine der Pumpen 46a und 46b verwendet werden. Anders ausgeführte Modulationssysteme, wie z. B. Pumpen mit mehreren oder weniger Kolben, asymmetrische Pumpen oder Zahnradpumpen sind ebenfalls einsetzbar. Außerdem kann jeder der beiden Bremskreise 10 und 12 noch mindestens einen Drucksensor 58, insbesondere an einer Zuleitung einer als Vorderachsbremszange genutzten ersten Radbremszange 14a und/oder dritten Radbremszange 14b, umfassen.

Das Bremssystem ist somit als ein modifiziertes Standard-Modulationssystem, insbesondere als Sechs-Kolben-ESP-System, ausführbar.

Es wird nochmals darauf hingewiesen, dass die Verwendung des oben beschriebenen Bremssystems mittels des im Weiteren erläuterten Verfahrens lediglich beispielhaft zu interpretieren ist. Die Ausführbarkeit des im Weiteren beschriebenen Verfahrens ist nicht auf die Verwendung eines derartigen Bremssystems limitiert. Insbesondere ist die Ausstattung des oben beschriebenen Bremssystems mit seinen aufgezählten Komponenten lediglich beispielhaft zu interpretieren.

Das Bremssystem ist als rekuperatives Bremssystem mit mindestens einem (nicht skizzierten) Generator ausgebildet. Auf eine vorteilhafte Vorgehensweise zum Verblenden eines Generator-Bremsmoments (ungleich Null) des Generators während einer Bremsung wird nachfolgend eingegangen.

Fig. 1b zeigt eine Teildarstellung des Bremssystems während einer Nichtbetätigung des Bremsbetätigungselements 28, welches in seiner Ausgangsstellung vorliegt. Vorzugsweise befindet sich auch der mindestens eine verstellbare Kolben 20 und 22 des Hauptbremszylinders 18, wie beispielsweise der Stangenkolben 20 und der Schwimmkolben 22, in seiner Ausgangsstellung. Das Volumen der mindestens einen Druckkammer 24a und 24b des Hauptbremszylinders 18 weist somit eine maximale Größe Vmax auf. In der mindestens einen Druckkammer 24a und 24b des Hauptbremszylinders 18 liegt somit ein Minimaldruck p0, beispielsweise entsprechend dem Atmosphärendruck, vor.

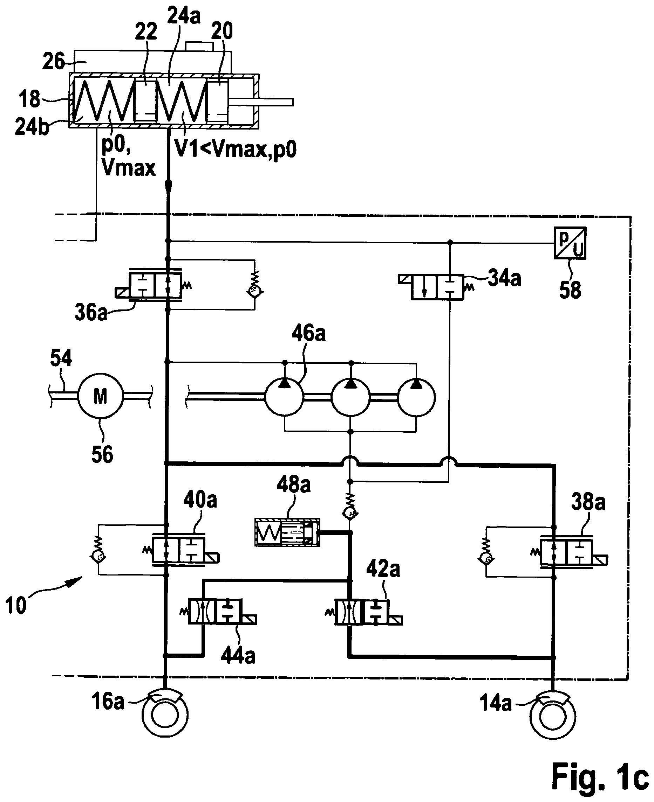

Fig. 1c zeigt eine schematische Darstellung des Bremssystems während einer Betätigung des Bremsbetätigungselements 28 durch den Fahrer bei gleichzeitigem Einsetzen eines (nicht dargestellten) Generators des rekuperativen Bremssystems. Man kann dies auch so umschreiben, dass der Generator in einen Zustand gesteuert wird, in welchem ein Generator-Bremsmoment ungleich Null auf mindestens eines der Räder ausgeübt wird.

Zum Verblenden eines Generator-Bremsmoments (ungleich Null) des Generators des rekuperativen Bremssystems mit den beiden Bremskreisen 10 und 12 wird einer der mindestens zwei Bremskreise 10 und 12 des Bremssystems in einen Verblendmodus gesteuert. Dies erfolgt durch ein zumindest teilweises Freischalten einer hydraulischen Verbindung zwischen dem Hauptbremszylinder 18 und einem Speichervolumen (z.B. Speicherkammer 48a oder 48b) des in den Verblendmodus gesteuerten Bremskreises 10 oder 12. Man kann dies auch als ein Öffnen des Speichervolumens (z.B. Speicherkammer 48a oder 48b) des in den Verblendmodus gesteuerten Bremskreises 10 oder 12 umschreiben. Auf diese Weise ist gewährleistbar, dass Bremsflüssigkeit aus dem Hauptbremszylinder 18 in das Speichervolumen (z.B. Speicherkammer 48a oder 48b) des in den Verblendmodus gesteuerten Bremskreises 10 oder 12 transferiert wird. Die in Fig. 1c wiedergegebene Verwendung des ersten Bremskreises 10 als den in den Verblendmodus gesteuerten Bremskreis 10 oder 12 ist lediglich beispielhaft zu interpretieren. Wie unten genauer erläutert wird, kann der mittels der Fig. 1c widergegebene Verfahrensschritt auch mit dem zweiten Bremskreis 12 ausgeführt werden.

Während der Ausführung des oben beschriebenen Verfahrensschritts wird ein weiterer der mindestens zwei Bremskreise 10 und 12 in einen Nicht-Verblendmodus gesteuert. Beispielsweise kann dies der zweite Bremskreis 12 sein. Zum Steuern des weiterer der mindestens zwei Bremskreise 10 und 12 in den Nicht-Verblendmodus wird eine hydraulische Verbindung zwischen dem Hauptbremszylinder 18 und einem Speichervolumen (z.B. Speicherkammer 48a oder 48b) des in den Nicht-Verblendmodus gesteuerten Bremskreises 10 oder 12 während des Nicht-Verblendmodus unterbrochen. Man kann dies auch als ein Schließen des Speichervolumens (z.B. Speicherkammer 48a oder 48b) des in den Nicht-Verblendmodus gesteuerten Bremskreises 10 oder 12 umschreiben.

Bei dem hier wiedergegebenen Verfahren erfolgt somit kein (gleichzeitiges) Freischalten einer ersten hydraulischen Verbindung zwischen dem Hauptbremszylinder 18 und einem Speichervolumen des ersten Bremskreises 10 und einer zweiten hydraulischen Verbindung zwischen dem Hauptbremszylinder 18 und einem Speichervolumen des zweiten Bremskreises 12. Stattdessen wird lediglich eine der beiden hydraulischen Verbindungen freigeschaltet, während die andere der beiden hydraulischen Verbindungen unterbrochen wird. Während der Ausführung des anhand der Fig. 1c wiedergegebenen Verfahrens zum Verblenden des Generator-Bremsmoments sind niemals beide hydraulische Verbindungen/Speichervolumen (Speicherkammern 48a und 48) gleichzeitig fälschlicherweise freigeschaltet/geöffnet.

Die hier beschriebene Vorgehensweise zum Verblenden des Generator-Bremsmoments ungleich Null weist den Vorteil auf, dass selbst bei einer unerkannten Funktionsbeeinträchtigung/einem nicht-festgestellten Funktionsausfall des Generators während eines Ansteuerns des Generators zum Aktivieren eines Soll-Generator-Bremsmoments ungleich Null lediglich eine hydraulische Verbindung zwischen dem Hauptbremszylinder 18 und dem Speichervolumen des in den Verblendmodus gesteuerten Bremskreises 10 oder 12 offen vorliegt, während die (andere) hydraulische Verbindung zwischen dem Hauptbremszylinder 18 und dem Speichervolumen des in den Nicht-Verblendmodus gesteuerten Bremskreises 10 oder 12 geschlossen/unterbrochen ist. Ein Bremsdruck in der mindestens einer Radbremszange 14a, 14b, 16a und 16b ist somit mittels der Fahrerbremskraft bereits nach einem Befüllen lediglich des Speichervolumens des in den Verblendmodus gesteuerten Bremskreises 10 oder 12 aufbaubar, während das Speichervolumen des in den Nicht-Verblendmodus gesteuerten Bremskreises 10 oder 12 für einen Bremsdruckaufbau in der mindestens einer Radbremszange 14a, 14b, 16a und 16b nicht zu befüllen ist. Man kann dies auch so umschreiben, dass die vor einem Bremsdruckaufbau in der mindestens einer Radbremszange 14a, 14b, 16a und 16b aus dem Hauptbremszylinder 18 zu verschiebende Bremsflüssigkeitsmenge (von dem herkömmlichen Wert entsprechend dem Gesamt-Befüllvolumen des Speichervolumens des in den Verblendmodus gesteuerten Bremskreises 10 oder 12 und des Speichervolumens des in den Nicht-Verblendmodus gesteuerten Bremskreises 10 oder 12) auf das Befüllvolumen Speichervolumen des in den Verblendmodus gesteuerten Bremskreises 10 oder 12 reduziert ist.

Somit muss der Fahrer für den gewünschten Bremsdruckaufbau in der mindestens einer Radbremszange 14a, 14b, 16a und 16b nicht solange mittels der Fahrerbremskraft Bremsflüssigkeit in die Speichervolumen der beiden Bremskreise 10 und 12 verschieben, bis beide Speichervolumen vollständig befüllt sind. Stattdessen ist es ausreichend, wenn der Fahrer mittels der Fahrerbremskraft Bremsflüssigkeit lediglich das Speichervolumen des in den Verblendmodus gesteuerten Bremskreises 10 und 12 drückt. Nach diesem vergleichsweise geringen Kraftaufwand/Arbeitsaufwand kann der Fahrer mittels eines weiteren Betätigens des Bremsbetätigungselements 28 verlässlich ein hydraulisches Bremsmoment ungleich Null aufbauen und somit das Fahrzeug leicht abbremsen. Der Fahrer kann somit selbst bei einer unerkannten Funktionsbeeinträchtigung/einem nicht-festgestellten Funktionsausfall des Generators während eines Ansteuerns des Generators zum Aktivieren eines Soll-Generator-Bremsmoments ungleich Null das Fahrzeug noch vergleichsweise komfortable abbremsen. Das in Fig. 1c wiedergegebene Verfahren zum Verblenden eines Generator-Bremsmoments gewährleistet somit einen verbesserten Sicherheitsstandard und einen größeren Bremskomfort.

Somit ist der Fahrer bei einem Ausführen des Verfahrens zum Verblenden des Generator-Bremsmoments nie in der Situation, dass beide Speichervolumen (Speicherkammern 48a und 48b) befüllt werden müssen, bevor ein hydraulisches Bremsmoment mindestens einer Radbremszange 14a, 14b, 16a und 16b aufbaubar ist. Man kann dies auch so umschreiben, dass der im Fehlerfall verlängerte Pedalweg bei einem Ausführen des Verfahrens zum Verblenden des Generator-Bremsmoments halbiert ist. Insbesondere kann der zum Befüllen des Speichervolumens des in den Verblendmodus gesteuerten Bremskreises 10 oder 12 auszuführende Zusatzbremsbetätigungsweg (Zusatzpedalweg), welcher den Bremsbetätigungsweg (Pedalweg) geringfügig verlängert, für den Fahrer (nahezu) unbemerkbar sein.

Das anhand der Fig. 1c wiedergegebene Verfahren zum Verblenden eines Generator-Bremsmoments ermöglicht eine ausreichende rekuperative Effizienz. Eine Steigerung der rekuperativen Effizienz ist insbesondere darin begründet, dass das Verfahren zum Verblenden des Generator-Bremsmoments den Fahrer bei der Modulationsaufgabe im Falle eines Ersetzens des regenerativen Bremsmoments unterstützt. Das zum Verblenden in das mindestens eine Speichervolumen abgelassene Flüssigkeitsvolumen kann bei einem anschließenden Ersetzen eines abnehmenden Generator-Bremsmoments zur Unterstützung des Fahrers genutzt werden, wie unten genauer ausgeführt wird. Eine Begrenzung des Generator-Bremsmoments auf einen Wert, welchen der Fahrer mittels der von ihm auf das Bremsbetätigungselement 28 aufgebrachten Dynamik noch leicht selbst ersetzen kann, ist somit nicht notwendig.

Wie anhand von Fig. 1c zu erkennen ist, kann der Schwimmkolben 22 während des Steuerns des ersten Bremskreises 10 in den Verblendmodus zum Verblenden des Generator-Bremsmoments (ungleich Null) in seiner Ausgangsstellung verharren. Somit wird lediglich das Volumen der ersten Druckkammer 24a auf eine Größe V1 kleiner als der maximalen Größe Vmax reduziert, während das Volumen der zweiten Druckkammer 24b noch die maximale Größe Vmax aufweist. Durch das Verschieben von Bremsflüssigkeit aus der ersten Druckkammer 24a in das Speichervolumen des angebundenen ersten Bremskreises 10 kann eine Druckerhöhung in beiden Druckkammern 24a und 24b, bzw. beiden Bremskreisen 10 und 12, verhindert werden. In den beiden Druckkammern 24a und 24b kann somit (nahezu) der Minimaldruck p0 vorliegen.

Als Speichervolumen eines Bremskreises 10 und 12 kann beispielsweise die jeweilige Speichkammer 48a oder 48b genutzt werden. Es wird jedoch darauf hingewiesen, dass jeder der Bremskreise 10 und 12 auch eine zusätzliche Speicherkammer aufweisen kann, welche zum Ausführen des Verfahrens zum Verblenden eines Generator-Bremsmoments als Speichervolumen genutzt werden kann. Die Ausführbarkeit des Verfahrens ist somit nicht auf die Nutzung einer Speicherkammer 48a oder 48b limitiert.

Beispielsweise kann die hydraulische Verbindung zwischen dem Hauptbremszylinder 18 und dem Speichervolumen des in den Verblendmodus gesteuerten Bremskreises zumindest teilweise freigeschaltet werden, indem mindestens ein Ventil des in den Verblendmodus gesteuerten Bremskreises 10 oder 12 zumindest zeitweise in einem zumindest teilgeöffneten Zustand gesteuert wird. Das zumindest zeitweise in einem teilgeöffneten Zustand gesteuerte Ventil kann mindestens ein Radauslassventil 42a, 42b, 44a und 44b des in den Verblendmodus gesteuerten Bremskreises 10 oder 12 sein. Ebenso kann ein Hochdruckschaltventil 34a oder 34b des in den Verblendmodus gesteuerten Bremskreises 10 oder 12 als das mindestens eine Ventil zumindest zeitweise in einen zumindest teilgeöffneten Zustand gesteuert werden. (In diesem Fall ist es vorteilhaft, auf die Ausstattung des rekuperativen Bremssystems mit den Überdruckventilen 50a und 50b zu verzichten).

Korrespondierend dazu kann die hydraulische Verbindung zwischen dem Hauptbremszylinder 18 und dem Speichervolumen des in den Nicht-Verblendmodus gesteuerten Bremskreises 10 oder 12 während des Nicht-Verblendmodus unterbrochen werden, indem mindestens ein Ventil des in den Nicht-Verblendmodus gesteuerten Bremskreises 10 oder 12 während des Nicht-Verblendmodus in seinen geschlossenen Zustand gesteuert wird. Auch für das dabei angesteuerte Ventil kann mindestens ein Radauslassventil 42a, 42b, 44a oder 44b und/oder mindestens ein Hochdruckschaltventil 34a oder 34b genutzt werden. Zum Ausführen des Verfahrens zum Verblenden eines Generator-Bremsmoments können somit in der Regel bereits an einem Bremssystem vorhandene Komponenten genutzt werden. Dies reduziert die Kosten und den Bauraumbedarf eines Bremssystems zum Ausführen des Verfahrens zum Verblenden eines Generator-Bremsmoments.

Es wird jedoch darauf hingewiesen, dass die Ausführbarkeit des hier beschriebenen Verfahrens nicht auf das Ansteuern mindestens eines Radauslassventils 42a, 42b, 44a oder 44b oder mindestens eines Hochdruckschaltventils 34a oder 34b limitiert ist. Anstelle oder als Ergänzung zu den hier genannten Ventilen 34a, 34b, 42a, 42b, 44a oder 44b kann auch mindestens ein weiteres Ventil angesteuert werden, über welches das Speichervolumen mit dem Hauptbremszylinder 18 verbunden ist.

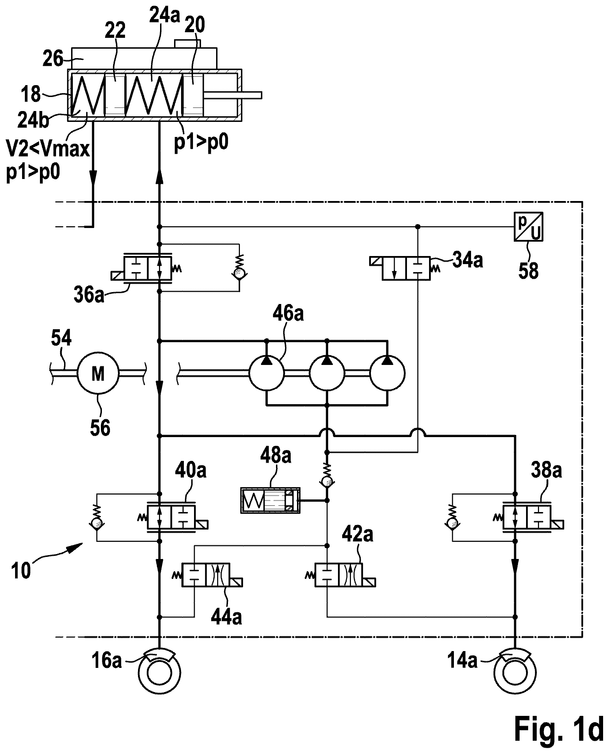

Fig. 1d zeigt eine schematische Teildarstellung des Bremssystems zum Erläutern eines optionalen weiteren Verfahrensschritts.

Bei dem in Fig. 1d wiedergegebenen Verfahrensschritt wird ein zeitliches Abnehmen des Generator-Bremsmoments ausgeglichen, indem durch eine Rückförderung des vorher in das Speichervolumen des in den Bremsmodus gesteuerten Bremskreises 10 oder 12 verschobenen Bremsflüssigkeitsvolumens ein Bremsdruck in mindestens einem Bremskreis 10 oder 12 aufgebaut wird. Beispielsweise kann zum Ausführen der Rückförderung eine Pumpe 46a oder 46b des zuvor in den Bremsmodus gesteuerten Bremskreises 10 oder 12 betreiben/in einen aktiven Modus gesteuert werden.

Wie anhand der Fig. 1d erkennbar ist, kann bei einer Ausstattung des Hauptbremszylinders 18 mit einem Schwimmkolben 22 die Rückförderung ein Verstellen des Schwimmkolbens aus seiner Ausgangsstellung, und damit eine Reduzierung des Volumens der zweiten Druckkammer 24b auf eine Größe V2 kleiner als der maximalen Größe Vmax, bewirken. Auf diese Weise kann beiden Bremskreisen 10 und 12, und somit in allen Radbremszylindern 14a, 14b, 16a und 16b, ein Bremsdruck p1 über dem Minimaldruck p0 aufgebaut werden. Insbesondere kann mittels der Rückförderung in beiden Druckkammern 24a und 24b, bzw. in beiden Bremskreisen 10 und 12, der gleiche Bremsdruck p1 aufgebaut werden.

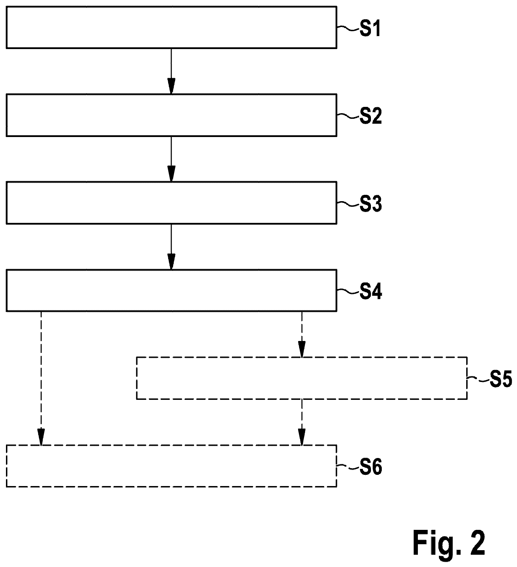

Fig. 2 zeigt ein Flussdiagramm zum Darstellen einer Ausführungsform des Verfahrens zum Betreiben eines rekuperativen Bremssystems.

Das nachfolgend beschriebene Verfahren kann beispielsweise mittels des oben beschriebenen Bremssystems ausgeführt werden. Die Ausführbarkeit des Verfahrens ist jedoch nicht auf die Verwendung eines derartigen Bremssystems beschränkt. Stattdessen ist das Verfahren mit (nahezu) jedem rekuperativen Bremssystem eines Fahrzeugs mit mindestens zwei Bremskreisen ausführbar.

In einem Verfahrensschritt S1 wird eine Bremsstärkegröße bezüglich einer Betätigung eines Bremsbetätigungselements des Bremssystems durch einen Fahrer des Fahrzeugs ermittelt. Die Bremsstärkegröße kann beispielsweise ein Verstellweg/Bremsbetätigungsweg mindestens einer verstellbaren Komponente des Bremsbetätigungselements und/oder einer Fahrerbremskraftübertragungskomponente sein. Die Bremsstärkegröße ist jedoch nicht auf die hier aufgezählten Werte limitiert.

In einem Verfahrensschritt S2 wird ein Soll-Generator-Bremsmoment eines Generators des Bremssystems unter Berücksichtigung zumindest der ermittelten Bremsstärkegröße festgelegt. Optionaler Weise kann das Festlegen des Soll-Generator-Bremsmoments unter zusätzlicher Berücksichtigung zumindest einer Information bezüglich eines maximal ausübbaren Kann-Generator-Bremsmoment erfolgen. Beispielsweise können dabei ein Ladezustand einer aufladbaren Fahrzeugbatterie und/oder eine aktuelle Geschwindigkeit des Fahrzeugs berücksichtigt werden.

In einem nachfolgenden Verfahrensschritt S3 wird der Generator unter Berücksichtigung des festgelegten Soll-Generator-Bremsmoment so angesteuert, dass ein dem Soll-Generator-Bremsmoment entsprechendes Generator-Bremsmoment auf mindestens ein Rad des Fahrzeugs ausgeübt wird.

Sofern mittels des angesteuerten Generators ein Generator-Bremsmoment über einem vorgegebenen Mindest-Generator-Bremsmoment auf mindestens ein Rad des Fahrzeugs ausgeübt wird und die ermittelte Bremsstärke zwischen einem vorgegebenen ersten Bremsstärkewert und einem vorgegebenen zweiten Bremsstärkewert größer als dem ersten Bremsstärkewert liegt, wird auch ein Verfahrensschritt S4 ausgeführt. In dem Verfahrensschritt S4 werden die mindestens zwei Bremskreise des Bremssystems gemäß dem Verfahren zum Verblenden eines Generator-Bremsmoments angesteuert. Dabei wird einer der mindestens zwei Bremskreise in den Verblendmodus gesteuert, während ein weiterer der mindestens zwei Bremskreise in den oben schon beschrieben Nicht-Verblendmodus gesteuert wird. Beispielsweise können in dem Verfahrensschritt S4 ein als erster Bremskreis festgelegter Bremskreis der mindestens zwei Bremskreise in den Verblendmodus und ein weiterer als zweiter Bremskreis festgelegter Bremskreis der mindestens zwei Bremskreise in den Nicht-Verblendmodus gesteuert werden.

Als erster Bremsstärkewert kann beispielsweise eine Bremsstärkegröße gleich Null vorgegeben werden. Der zweite vorgegebene Bremsstärkewert kann eine maximal ausübbare/ermittelbare Bremsstärkegröße sein. Als Alternative dazu kann mittels der mindestens zwei Bremsstärkewerte die Ausführbarkeit des Verfahrens zum Verblenden eines Generator-Bremsmoments auch auf einen dazu bevorzugten Bereich der Bremsstärkegröße beschränkt werden. Das vorgegebene Mindest-Generator-Bremsmoment kann gleich Null oder gleich einem gewünschten Verblend-Schwellwert vorgegeben werden.

In einer vorteilhaften Weiterbildung des Verfahrens umfasst dieses auch einen Verfahrensschritt S5, welcher ausgeführt wird, sofern mittels des angesteuerten Generators ein Generator-Bremsmoment über einen vorgegebenen Mindest-Generator-Bremsmoment ausgeübt wird und die ermittelte Bremsstärkegröße zwischen dem vorgegebenen zweiten Bremsstärkewert und einem vorgegebenen dritten Bremsstärkewert größer als dem zweiten Bremsstärkewert liegt. Beispielsweise kann in dem Verfahrensschritt S5 der zweite Bremskreis in den Verblendmodus und der erste Bremskreis in den Nicht-Verblendmodus gesteuert werden. Man kann dies auch so umschreiben, dass ab einer Bremsstärkegröße der Betätigung des Bremsbetätigungselements gleich dem vorgegebenen zweiten Bremsbetätigungswert die erste hydraulische Verbindung des ersten Bremskreises geschlossen/unterbrochen und gleichzeitig die zweite hydraulische Verbindung des zweiten Bremskreises geöffnet wird. Somit ist in diesem Fall während eines Ausführens der Verfahrensschritte S4 und S5 immer nur maximal einer der mindestens zwei Bremskreise in den Verblendmodus gesteuert. Das durch den Fahrer verschobene Bremsflüssigkeitsvolumen wird somit während der anfänglichen Bremsbetätigung ausschließlich in ein Speichervolumen des ersten Bremskreises verschoben und während bei einer späteren/stärkeren Betätigung des Bremsbetätigungselements das verschobene Bremsflüssigkeitsvolumen ausschließlich in ein Speichervolumen des zweiten Bremskreises transferiert wird. Bei einer Bremsbetätigung gleich dem vorgegebenen dritten Bremsstärkewert können beide hydraulischen Verbindungen geschlossen werden. Somit ist insbesondere bei einer starken Bremsbetätigung gewährleistet, dass die Fahrerbremskraft zum Aufbauen eines hydraulischen Bremsmoments nutzbar ist. Durch die hier beschriebene Strategie des Verfahrensschritts S5 können eventuelle Toleranzen bei der Befüllung der Speichervolumen leicht umgangen werden. Außerdem wird mittels des Verfahrensschritts S5 eine Verteilung des Lastkollektivs auf verschiedene Speichervolumen der mindestens zwei Bremskreise bewirkt. Mittels einer während des Verfahrensschritts S5 ausgeführten Druck/Volumen-Überwachung kann ein zu langer Pedalweg bei einem Ausfall des Generators verhindert werden. Dazu ist auch eine vereinfachte Volumenschätzung einsetzbar.

Als Alternative zu der oben beschriebenen Ausführungsform können in dem Verfahrensschritt S5 auch der erste Bremskreis und der zweite Bremskreis in den Verblendmodus gesteuert werden. Dazu können die hydraulische Verbindung zwischen dem Hauptbremszylinder und dem Speichervolumen des ersten Bremskreises und die hydraulische Verbindung zwischen dem Hauptbremszylinder und dem Speichervolumen des zweiten Bremskreises freigeschaltet werden. Man kann dies auch so umschreiben, dass ab einer Bremsstärkegröße gleich dem zweiten Bremsstärkewert, beispielsweise ab einem entsprechenden Pedalweg zusätzlich die hydraulische Verbindung zwischen dem Hauptbremszylinder und dem Speichervolumen des zweiten Bremskreises freigeschaltet wird, und somit auch das Speichervolumen des zweiten Bremskreises befüllt werden kann.

In einer vorteilhaften Weiterbildung weist das Verfahren einen zusätzlichen Verfahrensschritt S6 auf, welcher nach einem Ausführen des Verfahrens, bzw. nach einem Ausführen der Verfahrensschritte S1 bis S4 oder S1 bis S5, ausgeführt wird. Der Verfahrensschritt S6 wird vorzugsweise während/nach einem Wiederbeschleunigen des Fahrzeugs ausgeführt. In einer vorteilhaften Ausführung werden in dem Verfahrensschritt S6 der erste Bremskreis als der zweite Bremskreis und der zweite Bremskreis als der erste Bremskreis neu festgelegt. Man kann dies auch als eine ständige Permutation der Öffnungsreihenfolge umschreiben. Bei jeder Bremsbetätigung kann auf diese Weise die Öffnungsreihenfolge geändert werden.

Bei einer ersten Bremsbetätigung kann beispielsweise zunächst ein an einer vorderen Druckkammer des Hauptbremszylinders angebundener Bremskreis als erster Bremskreis betrieben werden, während ein an einer hinteren Druckkammer des Hauptbremszylinders angebundener Bremskreis als zweiter Bremskreis betrieben wird. In diesem Fall wird bei einem Verblenden zuerst das aus dem Hauptbremszylinder herausgedrückte Bremsflüssigkeitsvolumen ausschließlich in das Speichervolumen des an der vorderen Druckkammer des Hauptbremszylinders angebundenen Bremskreises verschoben. Erhöht der Fahrer die Bremsbetätigungsstärke, so kann zusätzlich die hydraulische Verbindung zwischen dem Hauptbremszylinder und dem Speichervolumen des an der vorderen Druckkammer des Hauptbremszylinders angebundenen Bremskreises unterbrochen/geschlossen und dafür die hydraulische Verbindung zwischen dem Hauptbremszylinder und dem Speichervolumen des an der hinteren Druckkammer des Hauptbremszylinders angebundenen Bremskreises freigeschaltet/geöffnet werden. Bei einer zweiten nachfolgenden Bremsbetätigung (z.B. nach einem zwischenzeitlichen Beschleunigen des Fahrzeugs) wird zunächst der an der hinteren Druckkammer des Hauptbremszylinders angebundene Bremskreis als erster Bremskreis betrieben, während der an der vorderen Druckkammer des Hauptbremszylinders angebundene Bremskreis als zweiter Bremskreis angesteuert wird. Dazu wird bei einem Verblenden zuerst die hydraulische Verbindung zwischen dem Hauptbremszylinder und dem Speichervolumen des an der hinteren Druckkammer des Hauptbremszylinders angebundenen Bremskreises geöffnet, während anschließend ab einer bestimmten Bremsbetätigungsstärke die hydraulische Verbindung zwischen dem Hauptbremszylinder und dem Speichervolumen des an der vorderen Druckkammer des Hauptbremszylinders angebundenen Bremskreises ausschließlich freigeschaltet/geöffnet wird. Die hier beschriebene Permutation der Öffnungsreihenfolge kann beliebig oft wiederholt werden.

Als Alternative kann in dem Verfahrensschritt S6 die Öffnungsreihenfolge auch anhand eines kumulierten aufgenommenen Volumens jeweils eines Speichervolumen der mindestens zwei Bremskreise festgelegt werden. Dies ist ausführbar, indem in dem Verfahrensschritt S6 eine erste Größe bezüglich eines während eines Betriebs eines Speichervolumens eines der mindestens zwei Bremskreise aufgenommenen Gesamt-Flüssigkeitsvolumens zumindest mit einer zweiten Größe bezüglich eines während eines Betriebs eines Speichervolumens eines weiteren der mindestens zwei Bremskreise aufgenommen Gesamt-Flüssigkeitsvolumens verglichen wird. Anschließend kann der Bremskreis mit der minimalen Größe von zumindest der ersten Größe und der zweiten Größe als der erste Bremskreis neu festgelegt werden. Das kumuliert aufgenommene Volumen, bzw. die erste Größe und/oder die zweite Größe, kann unter der Voraussetzung, dass gleichzeitig immer nur eine hydraulische Verbindung geöffnet ist, aus der erfassten Bremsbetätigungsgröße hergeleitet/berechnet werden. Dieses kumulierte aufgenommene Volumen eines Speichervolumens, wie insbesondere einer Speicherkammer, kann entscheiden, welches Speichervolumen zuerst geöffnet wird. Vorzugsweise wird immer das Speichervolumen zuerst geöffnet, das bisher das geringste kumulierte Volumen aufgenommen und damit die geringste Belastung erfahren hat.

Mittels des Verfahrensschritts S6 kann eine gleichmäßigere Lastverteilung realisiert werden. Da die mindestens zwei hydraulischen Verbindungen nicht mehr gleichzeitig geöffnet werden, hängt es nicht mehr von den Fertigungstoleranzen der einzelnen Speichervolumen ab, welches der Speichervolumen tatsächlich ein aus dem Hauptbremszylinder herausgedrücktes Bremsflüssigkeitsvolumen aufnimmt. Dies gewährleistet, dass mittels des Verfahrensschritts S6 ein Gesamt-Lastkollektiv gleichmäßiger auf die Speichervolumen verteilbar ist. Somit kann ein Ausfall eines Speichervolumens aufgrund einer übermäßigen Belastung verhindert werden. Dies kann eine Reparatur oder ein Austauschen eines übermäßig belasteten Speichervolumens unnötig machen.

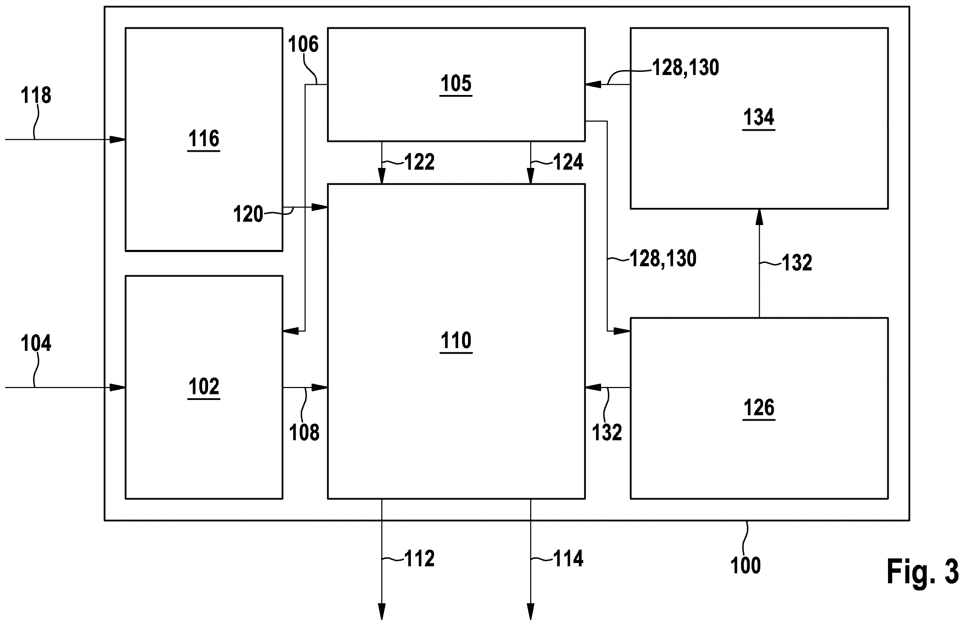

Fig. 3 zeigt eine schematische Darstellung einer Ausführungsform der Steuervorrichtung.

Die in Fig. 3 schematisch wiedergegebene Steuervorrichtung 100 kann insbesondere in einem rekuperativen Bremssystem mit zwei Bremskreisen eingesetzt werden. Beispielsweise kann die Steuervorrichtung 100 in dem oben beschriebenen Bremssystem verwendet werden. Die Benutzung der Steuervorrichtung 100 ist jedoch nicht auf ein derartiges Bremssystem limitiert.

Die Steuervorrichtung 100 weist eine erste Empfangseinrichtung 102 auf, mittels welcher eine Information 104 bezüglich eines ausgeübten oder ausübbaren Generator-Bremsmoments eines (nicht skizzierten) Generators empfangbar ist. Zumindest sofern das ausgeübte oder ausübbare Generator-Bremsmoment über einer von einer Speichereinheit 105 bereitgestellten Vergleichsinformation 106 bezüglich einem vorgegebenen Mindest-Generator-Bremsmoment liegt, ist ein zu dem ausgeübten oder ausübbaren Generator-Bremsmoment entsprechendes Ausgabesignal 108 ausgebbar. Sofern das Mindest-Generator-Bremsmoment gleich Null ist, kann auf einen Vergleich der Information 104 mit einer Vergleichsinformation 106 bezüglich des Mindest-Generator-Bremsmoments auch verzichtet werden.

Die Information 104 kann von einem externen Sensor an die Steuervorrichtung 100 bereitgestellt werden. Als Alternative dazu kann die Steuervorrichtung 100 auch dazu ausgelegt sein, das auszuübende oder ausübbare Generator-Bremsmoment selbst festzulegen. In diesem Fall ist die erste Empfangseinrichtung 102 eine interne Empfangseinrichtung/Weiteleiteinrichtung der Steuervorrichtung 100.

Die Steuervorrichtung 100 umfasst auch eine Steuereinrichtung 110, welche mittels des Ausgabesignals 108 so ansteuerbar ist, dass, sofern das ausgeübte oder ausübbare Generator-Bremsmoment über dem vorgegebenen Mindest-Generator-Bremsmoment 106 liegt, mittels eines von der Steuereinrichtung 110 ausgegebenen ersten Steuersignals 112 einer der mindestens zwei Bremskreise des Bremssystems in einen Verblendmodus steuerbar ist. Das Steuern des Bremskreises in den Verblendmodus erfolgt durch zumindest zeitweises Freischalten/Öffnen einer hydraulischen Verbindung zwischen einem Hauptbremszylinder des Bremssystems und einem Speichervolumen des in den Verblendmodus gesteuerten Bremskreises. Außerdem ist, sofern das ausgeübte oder ausübbare Generator-Bremsmoment über dem vorgegebenen Mindest-Generator-Bremsmoment liegt, mittels eines von der Steuereinrichtung 110 ausgegebenen zweiten Steuersignals 114 ein weiterer der mindestens zwei Bremskreise in einen Nicht-Verblendmodus steuerbar. Mittels des zweiten Steuersignals 114 ist damit eine hydraulische Verbindung zwischen dem Hauptbremszylinder und einem Speichervolumen des in dem Nicht-Verblendmodus gesteuerten Bremskreises während des Nicht-Verblendmodus unterbrechbar/schließbar.

Beispielsweise wird mittels des ersten Steuersignals 112 mindestens ein Ventil des in den Verblendmodus gesteuerten Bremskreises zumindest zeitweise in einen zumindest teilgeöffneten Zustand gesteuert, während mittels des zweiten Steuersignals mindestens ein Ventil des in den Nicht-Verblendmodus gesteuerten Bremskreises während des Nicht-Verblendmodus in seinem geschlossenen Zustand steuerbar ist. Ausführungsbeispiele für mittels der Steuersignale 112 und 114 ansteuerbare Ventile sind oben schon genannt.

In einer vorteilhaften Weiterbildung umfasst die Steuervorrichtung 100 auch eine zweite Empfangseinrichtung 116, mittels welcher ein Bremsstärkesignal 118 empfangbar und eine dem Bremsstärkesignal 118 entsprechende Bremsstärkegröße 120 bereitstellbar ist. In diesem Fall ist die Steuereinrichtung 110 vorzugsweise zusätzlich dazu ausgelegt, die bereitgestellte Bremsstärkegröße 120 mit zumindest einem vorgegebenen ersten Bremsstärkewert 122 und einem vorgegebenen zweiten Bremsstärkewert 124 größer als dem ersten Bremsstärkewert 122 zu vergleichen. Sofern das ausgeübte oder ausübbare Generator-Bremsmoment über dem vorgegebenen Mindest-Generator-Bremsmoment liegt und die Bremsstärkegröße zwischen dem vorgegebenen ersten Bremsstärkewert und dem vorgegebenen zweiten Bremsstärkewert liegt, kann die Steuereinrichtung 110 zusätzlich dazu ausgelegt sein, einen als ersten Bremskreis festgelegten Bremskreis der mindestens zwei Bremskreise in den Verblendmodus und einen weiteren als zweiten Bremskreis festgelegten Bremskreis der mindestens zwei Bremskreise in den Nicht-Verblendmodus zu steuern.

Ergänzend dazu kann die Steuereinrichtung 110 zusätzlich dazu ausgelegt sein, sofern das ausgeübte oder ausübbare Generator-Bremsmoment über dem vorgegebenen Mindest-Generator-Bremsmoment liegt und die Bremsstärkegröße 120 über dem vorgegebenen zweiten Bremsstärkewert 124 liegt, zumindest den zweiten Bremskreis in den Verblendmodus zu steuern. Entsprechend der bevorzugten Ausführungsform kann, sofern das ausgeübte oder ausübbare Generator-Bremsmoment über dem vorgegebenen Mindest-Generator-Bremsmoment liegt und die Bremsstärkegröße 120 über dem vorgegebenen zweiten Bremsstärkewert 124 liegt, der erste Bremskreis in den Verblendmodus oder in den Nicht-Verblendmodus steuerbar sein. Dies gewährleistet die oben schon beschriebenen Vorteile eines gleichmäßigen Einsetzens der Speichervolumen der mindestens zwei Bremskreise.

In einer weiteren vorteilhaften Ausführungsform umfasst die Steuervorrichtung 100 zusätzlich eine Vergleichseinrichtung 126, mit welcher eine erste Größe 128 bezüglich eines während eines Betriebs eines Speichervolumens eines der mindestens zwei Bremskreise aufgenommenen Gesamt-Flüssigkeitsvolumens zumindest mit einer zweiten Größe 130 bezüglich eines während eines Betriebs eines Speichervolumens eines weiteren der mindestens zwei Bremskreise aufgenommenen Gesamt-Flüssigkeitsvolumens vergleichbar ist. Vorteilhafter Weise ist die Vergleichseinrichtung 126 zusätzlich dazu ausgelegt, den Bremskreis mit der minimalen Größe von zumindest der ersten Größe und der zweiten Größe als den ersten Bremskreis neu festzulegen und eine entsprechende Bremskreis-Festlegungs-Information 132 an die Steuereinrichtung 110 auszugeben. Die Vorteile einer Festlegung der Öffnungsreihenfolge anhand des kumulierten aufgenommenen Volumens sind somit auch mittels der Steuervorrichtung 110 realisierbar.

Die Größen 128 und 130 können entweder von einem externen Sensor, von einer externen Steuerung oder von der Speichereinheit 105 bereitgestellt werden. Beispielsweise kann eine Speichervolumen-Überwachungseinheit 134 der Steuervorrichtung dazu ausgelegt sein, die Größen 128 und 130 unter Berücksichtigung zumindest der Information 104/des Ausgabesignals 108, der Bremsstärkegröße 120 und/oder der Bremskreis-Festlegungs-Information 132 festzulegen und an die Speichereinheit 105 auszugeben.

Die oben genannten Vorteile sind auch bei einem regenerativen Bremssystem mit der Steuervorrichtung 100 gewährleistet. Das Bremssystem kann zusätzlich noch mindestens eine der oben beschriebenen Bremssystem-Komponenten aufweisen. Auf eine weitere Beschreibung des Bremssystems wird deshalb hier verzichtet.

## Patentansprüche

1. Verfahren zum Betreiben eines rekuperativen Bremssystems eines Fahrzeugs mit mindestens zwei Bremskreisen (10, 12) mit den Schritten:
Ermitteln einer Bremsstärkegröße bezüglich einer Betätigung eines Bremsbetätigungselements (28) des Bremssystems durch einen Fahrer des Fahrzeugs (S1);
Festlegen eines Soll-Generator-Bremsmoments eines Generators des Bremssystems unter Berücksichtigung zumindest der ermittelten Bremsstärkegröße (S2);
Ansteuern des Generators unter Berücksichtigung des festgelegten Soll-Generator-Bremsmoments so, dass ein dem Soll-Generator-Bremsmoment entsprechendes Generator-Bremsmoment auf mindestens ein Rad des Fahrzeugs ausgeübt wird (S3), und,
sofern mittels des angesteuerten Generators ein Generator-Bremsmoment über einem vorgegebenen Mindest-Generator-Bremsmoment auf das mindestens eine Rad des Fahrzeugs ausgeübt wird und die ermittelte Bremsstärkegröße zwischen einem vorgegebenen ersten Bremsstärkewert und einem vorgegebenen zweiten Bremsstärkewert größer als dem ersten Bremsstärkewert liegt, Ansteuern der mindestens zwei Bremskreise (10, 12) des Bremssystems mit den Schritten:
- Steuern eines ersten Bremskreises (10) der mindestens zwei Bremskreise (10, 12) des Bremssystems in einen Verblendmodus, wobei eine hydraulische Verbindung zwischen einem Hauptbremszylinder (18) des Bremssystems und einem Speichervolumen (48a) des in den Verblendmodus gesteuerten ersten Bremskreises (10) zumindest zeitweise freigeschaltet wird, so dass Bremsflüssigkeit aus dem Hauptbremszylinder (18) in das Speichervolumen (48a) des in den Verblendmodus gesteuerten ersten Bremskreises (10) transferiert wird; und
- Steuern eines zweiten Bremskreises (12) der mindestens zwei Bremskreise (10, 12) in einen Nicht-Verblendmodus, wobei eine hydraulische Verbindung zwischen dem Hauptbremszylinder (18) und einem Speichervolumen (48b) des in den Nicht-Verblendmodus gesteuerten zweiten Bremskreises (12) während des Nicht-Verblendmodus unterbrochen wird (S4);
**dadurch gekennzeichnet, dass**
sofern mittels des angesteuerten Generators ein Generator-Bremsmoment über dem vorgegebenen Mindest-Generator-Bremsmoment ausgeübt wird und die ermittelte Bremsstärkegröße zwischen dem vorgegebenen zweiten Bremsstärkewert und einem vorgegebenen dritten Bremsstärkewert größer als dem zweiten Bremsstärkewert liegt, der erste Bremskreis (10) und der zweite Bremskreis (12) in den Verblendmodus gesteuert werden (S5).

2. Verfahren nach Anspruch 1, wobei die hydraulische Verbindung zwischen dem Hauptbremszylinder (18) und dem Speichervolumen (48a) des in den Verblendmodus gesteuerten ersten Bremskreises (10) zumindest zeitweise freigeschaltet wird, indem mindestens ein Ventil (42a, 44a) des in den Verblendmodus gesteuerten ersten Bremskreises (10) zumindest zeitweise in einen zumindest teilgeöffneten Zustand gesteuert wird, und/oder die hydraulische Verbindung zwischen dem Hauptbremszylinder (18) und dem Speichervolumen (48b) des in den Nicht-Verblendmodus gesteuerten zweiten Bremskreises (12) während des Nicht-Verblendmodus unterbrochen wird, indem mindestens ein Ventil (42b, 44b) des in den Nicht-Verblendmodus gesteuerten zweiten Bremskreises (12) während des Nicht-Verblendmodus in seinen geschlossenen Zustand gesteuert wird.

3. Verfahren nach Anspruch 2, wobei ein ABS/ASR/ESP-Bremssystem als das rekuperative Bremssystem betrieben wird, und wobei mindestens ein Radauslassventil (42a, 44a) als das mindestens eine Ventil (42a, 44a) des in den Verblendmodus gesteuerten ersten Bremskreises (10) zumindest zeitweise in einen zumindest teilgeöffneten Zustand gesteuert wird, und/oder mindestens ein Radauslassventil (42b, 44b) als das mindestens eine Ventil (42b, 44b) des in den Nicht-Verblendmodus gesteuerten zweiten Bremskreises (12) während des Nicht-Verblendmodus in seinen geschlossenen Zustand gesteuert wird.

4. Verfahren nach Anspruch 2, wobei ein ABS/ASR/ESP-Bremssystem als das rekuperative Bremssystem betrieben wird, und wobei ein Hochdruckschaltventil (34a) als das mindestens eine Ventil des in den Verblendmodus gesteuerten ersten Bremskreises (10) zumindest zeitweise in einen zumindest teilgeöffneten Zustand gesteuert wird, und/oder ein Hochdruckschaltventil (34b) als das mindestens eine Ventil des in den Nicht-Verblendmodus gesteuerten zweiten Bremskreises (12) während des Nicht-Verblendmodus in seinen geschlossenen Zustand gesteuert wird.

5. Verfahren nach Anspruch 1, wobei nach einem Ausführen des Verfahrens des Anspruchs 1 der erste Bremskreis (10) als der zweite Bremskreis und der zweite Bremskreis (12) als der erste Bremskreis neufestgelegt werden (S6).

6. Verfahren nach Anspruch 1, wobei nach einem Ausführen des Verfahrens des Anspruchs 1 eine erste Größe bezügliche eines während eines Betriebs eines Speichervolumens (48a) eines der mindestens zwei Bremskreise (10) aufgenommenen Gesamt-Flüssigkeitsvolumens zumindest mit einer zweiten Größe bezügliche eines während eines Betriebs eines Speichervolumens (48b) eines weiteren der mindestens zwei Bremskreise (12) aufgenommenen Gesamt-Flüssigkeitsvolumens verglichen wird, und wobei der Bremskreis mit der minimalen Größe von der ersten Größe und der zweiten Größe als der erste Bremskreis neu festgelegt wird (S6).

7. Steuervorrichtung (100) für ein rekuperatives Bremssystem mit zwei Bremskreisen (10, 12) mit:
einer ersten Empfangseinrichtung (102), mittels welcher eine Information (104) bezüglich eines ausgeübten oder ausübbaren Generator-Bremsmoments eines Generators empfangbar ist, und, zumindest sofern das ausgeübte oder ausübbare Generator-Bremsmoment über einem vorgegebenen Mindest-Generator-Bremsmoment (106) liegt, ein dem ausgeübten oder ausübbaren Generator-Bremsmoments entsprechendes Ausgabesignal (108) ausgebbar ist;
einer zweiten Empfangseinrichtung (116), mittels welcher ein Bremsstärkesignal (118) empfangbar und eine dem Bremsstärkesignal (118) entsprechende Bremsstärkegröße (120) bereitstellbar ist; und
eine Steuereinrichtung (110), welche dazu ausgelegt ist, die bereitgestellte Bremsstärkegröße (120) mit zumindest einem vorgegebenen ersten Bremsstärkewert (122) und einem vorgegebenen zweiten Bremsstärkewert (124) größer als dem ersten Bremsstärkewert (122) zu vergleichen, und welche mittels des Ausgabesignals (108) so ansteuerbar ist, dass, sofern das ausgeübte oder ausübbare Generator-Bremsmoment über dem vorgegebenen Mindest-Generator-Bremsmoment (106) liegt und die Bremsstärkegröße (120) zwischen dem vorgegebenen ersten Bremsstärkewert (122) und dem vorgegebenen zweiten Bremsstärkewert (124) liegt, mittels eines von der Steuereinrichtung (110) ausgegebenen ersten Steuersignals (112) ein erster Bremskreis (10) der mindestens zwei Bremskreise (1, 12) des Bremssystems so in einen Verblendmodus steuerbar ist, dass eine hydraulische Verbindung zwischen einem Hauptbremszylinder (18) des Bremssystems und einem Speichervolumen (48a) des in den Verblendmodus gesteuerten ersten Bremskreises (10) zumindest zeitweise freischaltbar ist, und mittels eines von der Steuereinrichtung (110) ausgegebenen zweiten Steuersignals (114) ein zweiter Bremskreis (12) der mindestens zwei Bremskreise (10, 12) in einen Nicht-Verblendmodus so steuerbar ist, dass eine hydraulische Verbindung zwischen dem Hauptbremszylinder (18) und einem Speichervolumen (48b) des in den Nicht-Verblendmodus gesteuerten zweiten Bremskreises (12) während des Nicht-Verblendmodus unterbrechbar ist;
**dadurch gekennzeichnet, dass**
die Steuereinrichtung (110) zusätzlich dazu ausgelegt ist, sofern das ausgeübte oder ausübbare Generator-Bremsmoments über dem vorgegebenen Mindest-Generator-Bremsmoment (106) liegt und die Bremsstärkegröße (120) zwischen dem vorgegebenen zweiten Bremsstärkewert (124) und einem vorgegebenen dritten Bremsstärkewert größer als dem zweiten Bremsstärkewert (124) liegt, den ersten Bremskreis (10) und den zweiten Bremskreis (12) in den Verblendmodus zu steuern.

8. Steuervorrichtung (100) nach Anspruch 7, wobei mittels des ersten Steuersignals (112) mindestens ein Ventil (42a, 44a) des in den Verblendmodus gesteuerten ersten Bremskreises (10) zumindest zeitweise in einen zumindest teil geöffneten Zustand steuerbar ist und/oder mittels des zweiten Steuersignals (114) mindestens ein Ventil (42b, 44b) des in den Nicht-Verblendmodus gesteuerten zweiten Bremskreises (12) während des Nicht-Verblendmodus in seinen geschlossenen Zustand steuerbar ist.

9. Steuervorrichtung (100) nach Anspruch 7, wobei die Steuervorrichtung (100) zusätzlich eine Vergleichseinrichtung (126) umfasst, mittels welcher eine erste Größe (128) bezügliche eines während eines Betriebs eines Speichervolumens (48a) eines der mindestens zwei Bremskreise (10) aufgenommenen Gesamt-Flüssigkeitsvolumens zumindest mit einer zweiten Größe (130) bezügliche eines während eines Betriebs eines Speichervolumens (48b) eines weiteren der mindestens zwei Bremskreise (12) aufgenommenen Gesamt-Flüssigkeitsvolumens vergleichbar ist, und wobei die Vergleichseinrichtung (126) zusätzlich dazu ausgelegt ist, den Bremskreis mit der minimalen Größe von zumindest der ersten Größe (128) und der zweiten Größe (139) als den ersten Bremskreis neu festzulegen.

10. Regeneratives Bremssystem mit einer Steuervorrichtung (100) nach einem der Ansprüche 7 bis 9.

## Claims

1. Method for operating a recuperative brake system of a vehicle having at least two brake circuits (10, 12), comprising the steps:
determining a braking intensity variable relating to an actuation of a brake actuation element (28) of the brake system by a driver of the vehicle (S1);
determining a setpoint generator braking torque of a generator of the brake system taking into account at least the determined braking intensity variable (S2);
actuating the generator taking into account the defined setpoint generator braking torque in such a way that a generator braking torque which corresponds to the setpoint generator braking torque is applied to at least one wheel of the vehicle (S3), and
if the actuated generator applies a generator braking torque over a predefined minimum generator braking torque to the at least one wheel of the vehicle and the determined braking intensity variable lies between a predefined first braking intensity value and a predefined second braking intensity value which is higher than the first braking intensity value, actuating the at least two brake circuits (10, 12) of the brake system, comprising the steps:
- placing a first brake circuit (10) of the at least two brake circuits (10, 12) of the brake system in a blending mode, wherein a hydraulic connection between a master brake cylinder (18) of the brake system and a storage volume (48a) of the first brake circuit (10) which is placed in the blending mode is at least temporarily opened so that brake fluid is transferred from the master brake cylinder (18) into the storage volume (48a) of the first brake circuit (10) which is placed in the blending mode; and
- placing a second brake circuit (12) of the at least two brake circuits (10, 12) in a non-blending mode, wherein a hydraulic connection between the master brake cylinder (18) and a storage volume (48b) of the second brake circuit (12) which is placed in the non-blending mode is interrupted during the non-blending mode (S4);
**characterized in that**
if a generator braking torque which is above the predefined minimum generator braking torque is applied by means of the actuated generator and the determined braking intensity variable is between the predefined second braking intensity value and a predefined third braking intensity value which is higher than the second braking intensity value, the first brake circuit (10) and the second brake circuit (12) are placed in the blending mode (S5).

2. Method according to Claim 1, wherein the hydraulic connection between the master brake cylinder (18) and the storage volume (48a) of the first brake circuit (10) which is placed in the blending mode is at least partially opened in that at least one valve (42a, 44a) of the first brake circuit (10) which is placed in the blending mode is placed at least temporarily in an at least partially opened state, and/or the hydraulic connection between the master brake cylinder (18) and the storage volume (48b) of the second brake circuit (12) which is placed in the non-blending mode is interrupted during the non-blending mode in that at least one valve (42b, 44b) of the second brake circuit (12) which is placed in the non-blending mode is placed in its closed state during the non-blending mode.

3. Method according to Claim 2, wherein an ABS/traction control system/ESP brake system is operated as the recuperative brake system, and wherein at least one wheel outlet valve (42a, 44a) is placed, as the at least one valve (42a, 44a) of the first brake circuit (10) which is placed in the blending mode, at least temporarily in an at least partially opened state, and/or at least one wheel outlet valve (42b, 44b) is placed, as the at least one valve (42b, 44b) of the second brake circuit (12) which is placed in the non-blending mode, in its closed state during the non-blending mode.

4. Method according to Claim 2 wherein an ABS/traction control system/ESP brake system is operated as the recuperative brake system, and wherein a high-pressure switching valve (34a) is placed, as the at least one valve of the first brake circuit (10) which is placed in the blending mode, at least temporarily in an at least partially opened state, and/or a high-pressure switching valve (34b) is placed, as the at least one valve of the second brake circuit (12) which is placed in the non-blending mode, in its closed state during the non-blending mode.

5. Method according to Claim 1, wherein after the execution of the method of Claim 1, the first brake circuit (10) is newly defined as the second brake circuit, and the second brake circuit (12) is newly defined as the first brake circuit (S6).

6. Method according to Claim 1, wherein after the execution of the method of Claim 1, a first variable relating to an overall fluid volume which is taken up during an operation of a storage volume (48a) of one of the at least two brake circuits (10) is compared at least with a further variable relating to an overall fluid volume which is taken up during the operation of a storage volume (48b) of a further of the at least two brake circuits (12), and wherein the brake circuit with the minimum magnitude of the first variable and of the second variable is newly defined as the first brake circuit (S6).

7. Control device (100) for a recuperative brake system having two brake circuits (10, 12), having:
a first receiver device (102) by means of which information (104) relating to a generator braking torque of a generator which is applied or can be applied can be received, and at least if the generator braking torque which is applied or can be applied is above a predefined minimum generator braking torque (106), an output signal (108) which corresponds to the generator braking torque which is applied or can be applied can be output;
a second receiver device (116) by means of which a braking intensity signal (118) can be received and a braking intensity variable (120) which corresponds to the braking intensity signal (118) can be made available; and
a control device (110) which is configured to compare the braking intensity variable (120) which is made available with at least one predefined first braking intensity value (122) and a predefined second braking intensity value (124) which is higher than the first braking intensity value (122), and which control device (110) can be actuated by means of the output signal (108) in such a way that if the generator braking torque which is applied or can be applied is above the predefined minimum generator braking torque (106) and the braking intensity variable (120) is between the predefined first braking intensity value (122) and the predefined second braking intensity value (124), a first brake circuit (10) of the at least two brake circuits (1, 12) of the brake system can be placed in, by means of a first control signal (112) which is output by the control device (110), a blending mode in such a way that a hydraulic connection between a master brake cylinder (18) of the brake system and a storage volume (48a) of the first brake circuit (10) which is placed in the blending mode can be at least temporarily opened, and a second brake circuit (12) of the at least two brake circuits (10, 12) can be placed, by means of a second control signal (114) which is output by the control device (110), in a non-blending mode in such a way that a hydraulic connection between the master brake cylinder (18) and a storage volume (48b) of the second brake circuit (12) which is placed in the non-blending mode can be interrupted during the non-blending mode;
**characterized in that**
the control device (110) is additionally configured, if the generator braking torque which is applied or can be applied is above the predefined minimum braking torque (106) and the braking intensity variable (120) is between the predefined second braking intensity value (124) and a predefined third braking intensity value which is higher than the second braking intensity value (124), to place the first brake circuit (10) and the second brake circuit (12) in the blending mode.

8. Control device (100) according to Claim 7, wherein at least one valve (42a, 44a) of the first brake circuit (10) which is placed in the blending mode by means of the first control signal (112) can be placed at least temporarily in an at least partially opened state, and/or at least one valve (42b, 44b) of the second brake circuit (12) which is placed in the non-blending mode can be placed, by means of the second control signal (114), in its closed state during the non-blending mode.

9. Control device (100) according to Claim 7, wherein the control device (100) additionally comprises a comparator device (126) by means of which a first variable (128) relating to an overall fluid volume which is taken up during the operation of a storage volume (48a) of one of the at least two brake circuits (10) can be compared at least with a second variable (130) relating to an overall fluid volume which is taken up during the operation of a storage volume (48b) of a further of the at least two brake circuits (12), and wherein the comparator device (126) is additionally configured to newly define the brake circuit with the minimum magnitude of at least the first variable (128) and of the second variable (139) as the first brake circuit.

10. Regenerative brake system having a control device (100) according to one of Claims 7 to 9.

## Revendications

1. Procédé pour faire fonctionner un système de freinage à récupération d'un véhicule pourvu d'au moins deux circuits de freinage (10, 12), comprenant les étapes suivantes:
déterminer une grandeur de l'intensité de freinage concernant un actionnement d'un élément d'actionnement de frein (28) du système de freinage par un conducteur du véhicule (S1);
fixer un couple de freinage du générateur de consigne d'un générateur du système de freinage en tenant compte au moins de la grandeur de l'intensité de freinage déterminée (S2);
commander le générateur en tenant compte du couple de freinage du générateur de consigne fixé, de telle manière qu'un couple de freinage du générateur correspondant au couple de freinage du générateur de consigne soit exercé sur au moins une roue du véhicule (S3) ; et
dans la mesure où un couple de freinage du générateur supérieur à un couple de freinage du générateur minimum prédéterminé est exercé sur ladite au moins une roue du véhicule au moyen du générateur commandé et que la grandeur de l'intensité de freinage déterminée se situe entre une première valeur de l'intensité de freinage prédéterminée et une deuxième valeur de l'intensité de freinage prédéterminée supérieure à la première valeur de l'intensité de freinage, commander lesdits au moins deux circuits de freinage (10, 12) du système de freinage avec les étapes suivantes:
- commander un premier circuit de freinage (10) desdits au moins deux circuits de freinage (10, 12) du système de freinage dans un mode d'annulation, dans lequel on libère au moins temporairement une liaison hydraulique entre le maître-cylindre (18) du système de freinage et un volume de stockage (48a) du premier circuit de freinage (10) commandé dans le mode d'annulation, de telle manière que du liquide de frein soit transféré du maître-cylindre (18) dans le volume de stockage (48a) du premier circuit de freinage (10) commandé dans le mode d'annulation; et
- commander un deuxième circuit de freinage (12) desdits au moins deux circuits de freinage (10, 12) dans un mode de non-annulation, dans lequel on interrompt pendant le mode de non-annulation une liaison hydraulique entre le maître-cylindre (18) et un volume de stockage (48b) du deuxième circuit de freinage (12) commandé dans le mode de non-annulation (S4) ;
**caractérisé en ce que** dans la mesure où un couple de freinage du générateur supérieur au couple de freinage du générateur minimum prédéterminé est exercé au moyen du générateur commandé et que la grandeur de l'intensité de freinage déterminée se situe entre la deuxième valeur de l'intensité de freinage prédéterminée et une troisième valeur de l'intensité de freinage prédéterminée supérieure à la deuxième valeur de l'intensité de freinage, on commande le premier circuit de freinage (10) et le deuxième circuit de freinage (12) dans le mode d'annulation (S5).

2. Procédé selon la revendication 1, dans lequel on libère au moins temporairement la liaison hydraulique entre le maître-cylindre (18) et le volume de stockage (48a) du premier circuit de freinage (10) commandé dans le mode d'annulation, par le fait que l'on commande au moins temporairement dans un état au moins partiellement ouvert au moins une soupape (42a, 44a) du premier circuit de freinage (10) commandé dans le mode d'annulation, et/ou on interrompt pendant le mode de non-annulation la liaison hydraulique entre le maître-cylindre (18) et le volume de stockage (48b) du deuxième circuit de freinage (12) commandé dans le mode de non-annulation, par le fait que l'on commande au moins une soupape (42b, 44b) du deuxième circuit de freinage (12) commandé dans le mode de non-annulation dans son état fermé pendant le mode de non-annulation.

3. Procédé selon la revendication 2, dans lequel on fait fonctionner un système de freinage ABS/ASR/ESP comme un système de freinage à récupération, et dans lequel on commande au moins temporairement dans un état au moins partiellement ouvert au moins une soupape de sortie de roue (42a, 44a) comme ladite au moins une soupape (42a, 44a) du premier circuit de freinage (10) commandé dans le mode d'annulation, et/ou on commande au moins une soupape de sortie de roue (42b, 44b) dans son état fermé pendant le mode de non-annulation comme ladite au moins une soupape (42b, 44b) du deuxième circuit de freinage (12) commandé dans le mode de non-annulation.

4. Procédé selon la revendication 2, dans lequel on fait fonctionner un système de freinage ABS/ASR/ESP comme un système de freinage à récupération, et dans lequel on commande au moins temporairement dans un état au moins partiellement ouvert une soupape de commande haute pression (34a) comme ladite au moins une soupape du premier circuit de freinage (10) commandé dans le mode d'annulation, et/ou on commande dans son état fermé pendant le mode de non-annulation une soupape de commande haute pression (34b) comme ladite au moins une soupape du deuxième circuit de freinage (12) commandé dans le mode de non-annulation.

5. Procédé selon la revendication 1, dans lequel, après une exécution du procédé selon la revendication 1, on fixe de nouveau le premier circuit de freinage (10) comme deuxième circuit de freinage et le deuxième circuit de freinage (12) comme premier circuit de freinage.

6. Procédé selon la revendication 1, dans lequel, après une exécution du procédé selon la revendication 1, on compare une première grandeur concernant un volume de liquide total contenu pendant un fonctionnement d'un volume de stockage (48a) d'un desdits au moins deux circuits de freinage (10) au moins avec une deuxième grandeur concernant un volume de liquide total contenu pendant un fonctionnement d'un volume de stockage (48b) d'un autre desdits au moins deux circuits de freinage (12), et dans lequel on fixe de nouveau le circuit de freinage présentant la grandeur minimale de la première grandeur et la deuxième grandeur comme le premier circuit de freinage (S6) .

7. Dispositif de commande (100) pour un système de freinage à récupération pourvu de deux circuits de freinage (10, 12), comprenant:
un premier dispositif de réception (102), au moyen duquel une information (104) concernant un couple de freinage du générateur exercé ou pouvant être exercé d'un générateur peut être reçue, et, au moins dans la mesure où le couple de freinage du générateur exercé ou pouvant être exercé se situe au-dessus d'un couple de freinage du générateur minimum prédéterminé (106), un signal de sortie (108) correspondant au couple de freinage du générateur exercé ou pouvant être exercé peut être émis;
un deuxième dispositif de réception (116), au moyen duquel un signal de l'intensité de freinage (118) peut être reçu et une grandeur de l'intensité de freinage (120) correspondant au signal de l'intensité de freinage (118) peut être fournie; et
un dispositif de commande (110), qui est conçu pour comparer la grandeur de l'intensité de freinage fournie (120) avec au moins une première valeur de l'intensité de freinage prédéterminée (122) et une deuxième valeur de l'intensité de freinage prédéterminée (124) supérieure à la première valeur de l'intensité de freinage (122), et qui peut être commandée au moyen du signal de sortie (108) de telle manière que, dans la mesure où le couple de freinage du générateur exercé ou pouvant être exercé se situe au-dessus du couple de freinage du générateur minimum prédéterminé (106) et que la grandeur de l'intensité de freinage (120) se situe entre la première valeur de l'intensité de freinage prédéterminée (122) et la deuxième valeur de l'intensité de freinage prédéterminée (124), un premier circuit de freinage (10) desdits au moins deux circuits de freinage (10, 12) du système de freinage peut être commandé dans un mode d'annulation au moyen d'un premier signal de commande (112) émis par le dispositif de commande (110), de telle manière qu'une liaison hydraulique entre un maître-cylindre (18) du système de freinage et un volume de stockage (48a) du premier circuit de freinage (10) commandé dans le mode d'annulation puisse être libérée' au moins temporairement, et un deuxième circuit de freinage (12) desdits au moins deux circuits de freinage (10, 12) peut être commandé dans un mode de non-annulation au moyen d'un deuxième signal de commande (114) émis par le dispositif de commande (110), de telle manière qu'une liaison hydraulique entre le maître-cylindre (18) et un volume de stockage (48b) du deuxième circuit de freinage (12) commandé dans le mode de non-annulation puisse être interrompue pendant le mode de non-annulation;
**caractérisé en ce que** le dispositif de commande (110) est en outre conçu pour, dans la mesure où le couple de freinage du générateur exercé ou pouvant être exercé se situe au-dessus du couple de freinage du générateur minimum prédéterminé (106) et que la grandeur de l'intensité de freinage (120) se situe entre la deuxième valeur de l'intensité de freinage prédéterminée (124) et une troisième valeur de l'intensité de freinage prédéterminée supérieure à la deuxième valeur de l'intensité de freinage (124), commander le premier circuit de freinage (10) et le deuxième circuit de freinage (12) dans le mode d'annulation.

8. Dispositif de commande (100) selon la revendication 7, dans lequel au moins une soupape (42a, 44a) du premier circuit de freinage (10) commandé dans le mode d'annulation peut être commandée au moyen du premier signal de commande (112) au moins temporairement dans un état au moins partiellement ouvert et/ou au moins une soupape (42b, 44b) du deuxième circuit de freinage (12) commandé dans le mode de non-annulation peut être commandée au moyen du deuxième signal de commande (114) dans son état fermé pendant le mode de non-annulation.

9. Dispositif de commande (100) selon la revendication 7, dans lequel le dispositif de commande (100) comprend en outre un dispositif de comparaison (126), au moyen duquel une première grandeur (128) concernant un volume de liquide total contenu pendant un fonctionnement d'un volume de stockage (48a) d'un desdits au moins deux circuits de freinage (10) peut être comparée à au moins une deuxième grandeur (130) concernant un volume de liquide total contenu pendant un fonctionnement d'un volume de stockage (48b) d'un autre desdits au moins deux circuits de freinage (12), et dans lequel le dispositif de comparaison (126) est en outre conçu pour fixer de nouveau le circuit présentant la grandeur minimale d'au moins la première grandeur (128) et la deuxième grandeur (139) comme le premier circuit de freinage.

10. Système de freinage à régénération doté d'un dispositif de commande (100) selon l'une quelconque des revendications 7 à 9.
